Europäisches Patentamt

**European Patent Office**

**Office européen des brevets**

(19)

(11) Publication number: **0 000 646**
A1

## EUROPEAN PATENT APPLICATION

(12)

(21) Application number: **78300171.2**

(22) Date of filing: **20.07.78**

(51) Int. Cl.2: **H 01 B 13/00**, G 21 K 5/04

(30) Priority: **20.07.77 US 817323**

(43) Date of publication of application:
**07.02.79 Bulletin 79/3**

(84) Designated contracting states:
**BE CH DE FR GB NL**

(71) Applicant: **Akzona Incorporated
Asheville
North Carolina 28802. (US)**

(72) Inventor: **Dwyer, Irving N.
Stanton Lane Preston
Connecticut, 06360. (US)**

(74) Representative: **Boon, Graham Anthony
Elkington and Fife
High Holborn House 52/54 High Holborn
London, WC1V 6SH. (GB)**

(54) **Process and apparatus for the radiation curing of cable insulation.**

(57) A process and apparatus for curing the insulation of a cable using radiation, as the cable is fed from a payoff reel 2 to a takeup reel 3. In order to ensure that the insulation is substantially uniformly cured the cable is caused to pass not only linearly in close proximity to an irradiation spread source 38, but is also caused to rotate continuously about its longitudinal axis through 360°. This is achieved by rotating each reel about a respective axis to cause cable to be fed from the reel 2 to the reel 3, and about a second axis to cause rotation of the cable about its longitudinal axis.

EP 0 000 646 A1

Croydon Printing Company Ltd.

1

# T I T L E

Process and apparatus for the
radiation curing of cable
insulation.

This invention relates to a process and apparatus
for the radiation curing of cable insulation. The
invention is particularly, though not exclusively,
useful for large diameter cable.
Irradiation techniques for curing polymer insulation
on electric cables have been effective only for small
diameter cables and then only partially effective. One
technique is a process known as festooning. Cable is
passed back and forth several times under a radiation
horn by means of a plurality of sheaves. In this way,
it is hoped that the cable is irradiated all around.
However, this is a rather uncontrollable and random
approach, and thus the cable is not always uniformly
irradiated. Furthermore, this technique is only effective
with relatively small diameter cable, normally only up
to 0.85 mm. This cable size limitation exists because
large diameter wire cannot tolerate the mechanical stress

2

caused by the 180 degree bends around the sheaves.

For cable over 0.85 mm in diameter, other techniques of curing the polymer jacket have been utilized. These techniques include, for example, heat curing by the use of a hot air oven, continuous steam tube curing, and chemical curing. However, all of these techniques have rather serious drawbacks.

Heat curing processes are time consuming, require a large oven space, and will not allow the use of certain thermoplastic components which are desirable in cable insulation. Furthermore, moulds over the cable jacket are required in some cases in heat curing processes.

In chemical curing processes, quite often the cable can become porous, and may undergo mechanical and dielectric property changes. Furthermore, many of the chemicals used for curing are rather volatile and dangerous.

Accordingly, it is one object of this invention to provide an improved process for curing insulation on cables by irradiating the cable, the process being capable of use on large diameter cable without the need for chemicals or heat curing, and without the need for a large number of bends in the cable during curing.

In accordance with the invention, there is provided a process for curing the insulation of a cable using radiation, as the cable is fed from a payoff reel to a takeup reel, characterised in that it comprises the steps of passing the cable in a linear direction in close proximity to an irradiation spread source, and continuously rotating the cable through 360° about its axis as it passes by the irradiation spread source, by simultaneously rotating the payoff and takeup reels both about and along the longitudinal axis of the cable, whereby the cable insulation is substantially uniformally cured.

To carry out this process the invention provides an apparatus for curing the insulation of a cable, comprising a payoff reel, a takeup reel for receiving the cable feed thereto from the payoff reel, an irradiation spread source, means for passing the cable in a linear direction in the presence of the irradiation spread source by rotating the payoff and takeup reels in the direction of the longitudinal axis of the cable, and means for rotating the cable about its longitudinal axis as it passes near the irradiation spread source in continuous 360° turns by rotating said payoff and said takeup reels about the longitudinal axis of the cable, whereby the cable insulation is substantially uniformly cured.

Embodiments of the invention are described below with reference to the attached drawings in which:

Figure 1 is a diagrammatic view of one embodiment of the invention, with portions shown as a cross-section;

Figure 2 is a perspective view of a portion of an irradiation horn and cable showing the relative motion of the cable under the horn;

Figure 3 is a perspective view of the cured cable; and

Figure 4 is a view similar to Figure 1 showing an alternative embodiment of the invention.

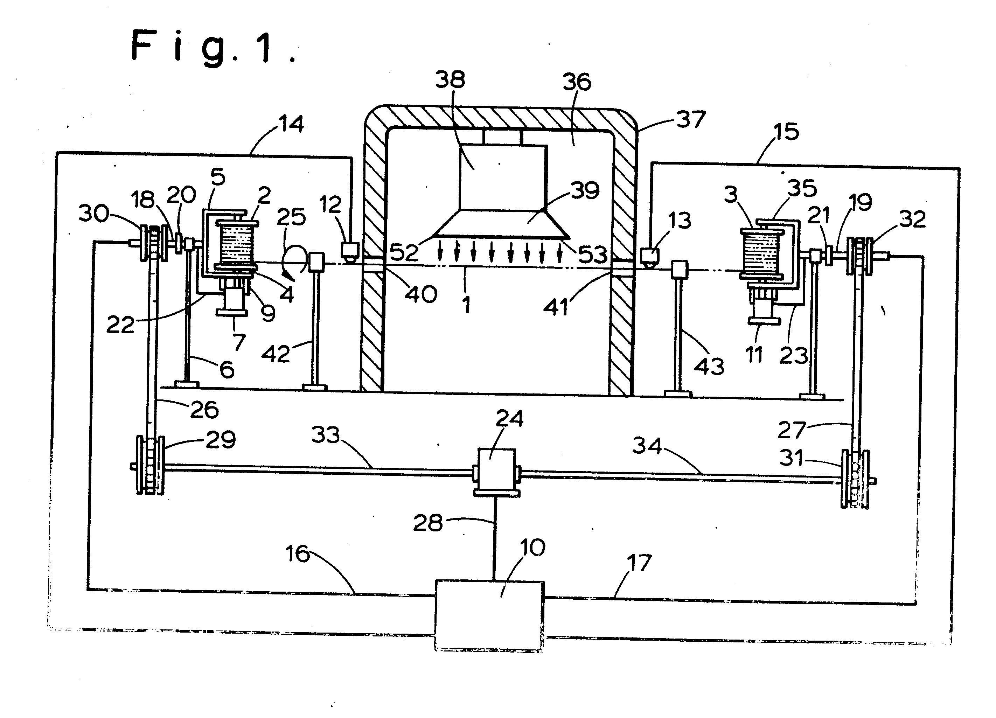

Figure 1 shows an electric insulated cable 1 which is partially wound about a payoff reel 2 and a takeup reel 3. The payoff reel 2 is mounted on an axle member 4. The reel and axle are mounted in a cradle 5. The reel, axle member and cradle are firmly supported on the floor by means of legs 6. An electric motor 7 is connected to an axle 4 and drives the payoff reel 2 so that the cable 1 moves linearly in the direction of the arrow 8.

4

The motor 7 is secured to the cradle 5 by mounting brackets 9. The takeup reel 3 is mounted and operates in a similar fashion to the payoff reel 2, being driven by a motor 11, and secured to a cradle 35. The motors 7 and 11 may be variable frequency D.C. drive eddy current motors. The reel motors are synchronized so that the cable 1 is under substantially constant tension as it moves in a linear direction. The motors may be synchronized by the use of tachometers 12 and 13, which are in contact with the moving cable, and a variable frequency drive control 10. The tachometers 12 and 13 are electrically connected to the drive control 10 by leads 14 and 15. Motor control signals are provided from the drive control 10 through leads 16 and 17 respectively. The leads 16 and 17 pass through hollow axles 18 and 19. The electrical energy is transferred to the motors through collector rings 20 and 21 on to leads 22 and 23 which are connected to the motors 7 and 11.

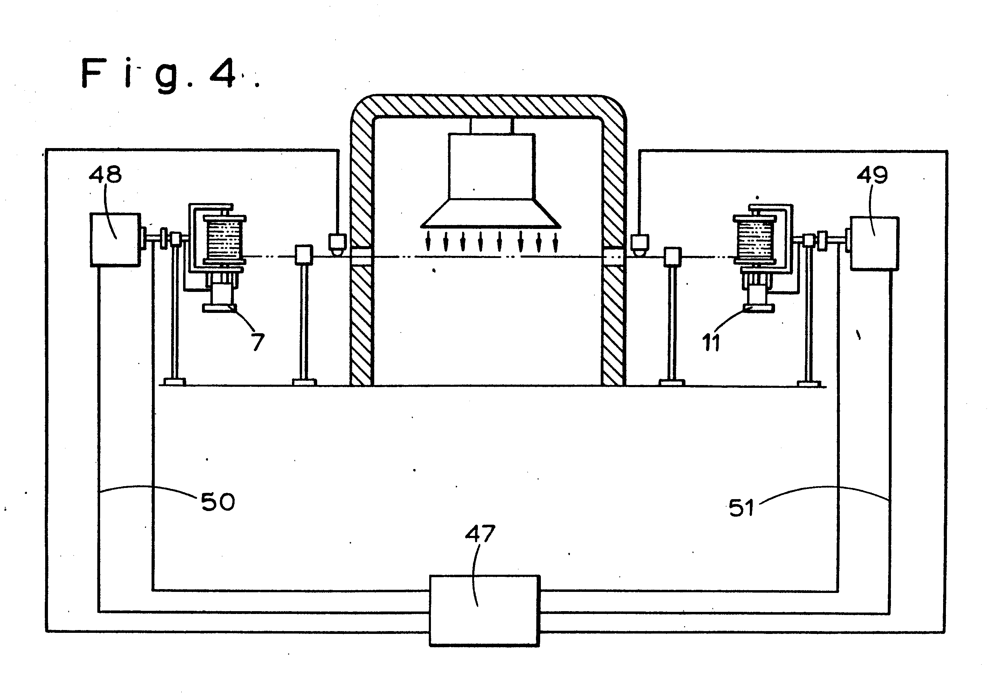

There is further provided an electric motor 24 which drives the reels 2 and 3 about the axis of axles 18 and 19 as indicated by arrow 25. Motor 24 may for example, be a variable frequency D.C. eddy current motor, and is controlled by the variable frequency drive control 10. The motor 24 is electrically connected to the drive control 10 through a lead 28. The rotation of both reels is synchronized by means of mechanical timing belts 26 and 27 which are coupled to pulleys 29, 30, 31, and 32. Pulleys 29 and 31 are coupled to the drive shaft of the motor 24 by rods 33 and 34. Pulleys 30 and 32 are coupled to the cradles 5 and 35 the axles 18 and 19. Other means of rotational synchronization, such as an electrical circuitry, may be provided, and one such

5

means will be explained with reference to Figure 4.

Referring again to Figure 1, the apparatus further includes an irradiation housing 36 which is enclosed by concrete walls 37. An irradiation spread source 38 and an accompanying horn 39 are attached to the ceiling of housing 36. The cable 1 is passed under the horn 39 and thus is exposed to radiation. In this embodiment the radiation source generates electron radiation. The intensity of the radiation is usually kept in the range between five and forty megarads. The cable 1 is kept at a constant distance from the horn during rotation of the takeup and payoff reels by means of holes 40 and 41 in the concrete walls as well as cable guides 42 and 43 which are attached to the floor. The horn 39 should be wide enough to completely cover one side of large diameter cables and long enough to allow the cable to move at a rapid linear and rotational speed in the radiation housing for complete coverage. For slow linear and rotational speeds of, for example, 1.5 m. per minute and five revolutions per minute a horn 1 m. in length is long enough to give adequate radiation coverage. For fast linear and rotational speeds of, for example, 30 m. per minute and fifty revolutions per minute a horn 2 m. in length is long enough to give adequate radiation coverage. Other horn lengths may be used for speeds between the above limits. Of course, these limits depend on the intensity of the radiation.

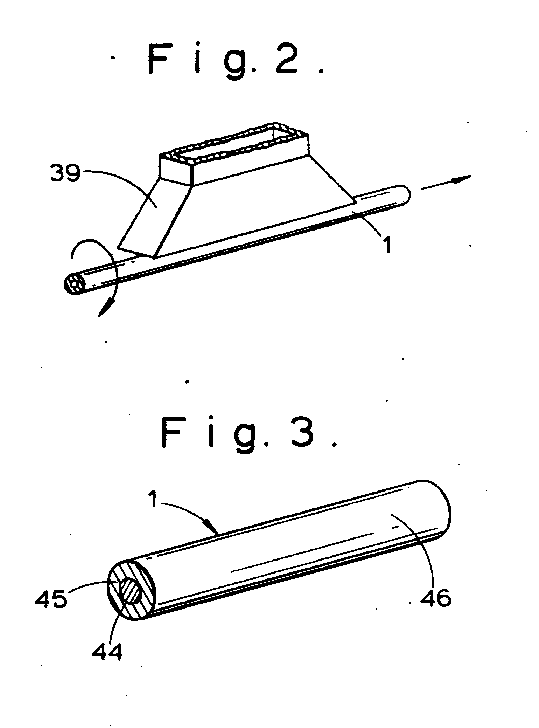

This may be better illustrated in Figure 2 which shows the cable 1 passing directly under the horn 39 which evenly covers the cable with electron radiation. While the radiation is being applied, the cable moves both in a linear and rotational direction as indicated by the arrows. The most efficient manner of obtaining complete

6

and even radiation coverage of the cable is for the linear speed and rotation speed of the cable be such that any point on the outer circumference of the cable makes a whole number of turns between its first contact with a substantial amount of radiation and its last contact with a substantial amount of radiation. The horn is designed in the shape of a three-dimensional trapezoid for a relatively even disbursement of electron radiation on the cable.

Figure 3 shows the cable 1 which has been irradiated by the use of the method shown in Figure 1. This cable includes at least one wire conductor 44 and a polymer insulation 45 which is, in this embodiment, a flexible material.. Some of the specific types of insulation materials which may be irradiated using this method include polyethylene, chlorosulphonated polyethylene, ethylene propylene rubber and chlorinated polyethylene. Other types of insulation material may also be irradiated. As can be seen, the outer surface 46 of the insulation is smooth and shows no sign of porosity. There is also less danger of dielectric changes and mechanical breakdown or weakness.

Figure 4 shows an alternative embodiment in which the mechanical timing belts are replaced by electrical motor controls enclosed in a control box 47 and an additional motor. The control box 47 houses variable frequency drive controls and is connected to variable frequency D.C. drive eddy current motors 48 and 49 by leads 50 and 51. The control box 47 also controls motors 7 and 11 in the same manner as the drive control 10 does in the embodiment of Figure 1.

The operation of the apparatus shown in Figure 1 is described below. The cable 1 is forced off the payoff

7

reel 2 by means of the motor 7. The cable is rotated about the axle 18 by means of the motor 24 and the timing belts and pulleys. The cable is guided along by the cable guide 42 and then passes through the hole 40 in wall 37 of the irradiation chamber. The cable then passes under the radiation horn 37 and electron radiation is applied to the polymeric jacket of the cable. As the cable is rotated and linearly translated, the insulation is uniformly cured and each point on the cable may be rotated a whole number of times between the outer extremities 52 and 53 of the horn 39. Since it is difficult to maintain radiation of exact intensity under all parts of the horn, it is desirable that each point on the cable be rotated at least two revolutions between the extremities 52 and 53 of the horn. In this way a point which is on top of the cable, that is, closest to the horn at end 52, will have passed under the horn at its outer periphery as well as near the centre of the horn where the radiation is usually the most intense. The cable then passes through the hole 41 which together with the hole 40 and the cable guides 42 and 43 help maintain a constant distance between the cable and the horn. The radiation cured cable is gathered on the takeup reel 3 which is rotating synchronously with the payoff reel 2. The drive control 10 enables an operator to set and control rotational and translational speeds of the cable.

The process and apparatus described above enables one to irradiate cable uniformly and are especially useful in irradiating cable of large diameters, for example, larger than 0.85 mm. There are no sheaves to bend the cable 180° as in the known festooning method of irradiation. Furthermore, all the disadvantages

8

mentioned in the discussion of heat and chemical curing are avoided.

Many modifications may be made to the embodiments described above. For example, other types of irradiation curing could be used besides electron irradiation.

1

CLAIMS:

1. A process for curing the insulation of a cable using radiation, as the cable is fed from a payoff reed to a takeup reel, characterised in that it comprises the steps of passing the cable in a linear direction in close proximity to an irradiation spread source, and continuously rotating the cable through 360° about its axis as it passes by the irradiation spread source, by simultaneously rotating the payoff and takeup reels both about and along the longitudinal axis of the cable, whereby the cable insulation is substantially uniformly cured.

2. A process as claimed in claim 1 wherein the irradiation source is an electron beam generator.

3. A process as claimed in claim 1 or 2, wherein the radiation is directed to the cable from the irradiation source by a horn which is in the shape of a three dimensional trapezoid and of a width sufficient to completely cover the cable.

4. A process as claimed in any preceding claim, wherein each point on the outer circumference of the cable is turned substantially a whole number of times between its first contact with a substantial amount of radiation and its last contact with a substantial amount of radiation.

5. A process as claimed in any preceding claim, wherein each point on the cable is maintained at a substantial constant distance from the irradiation source as each point passes under the irradiation source.

2

6. A process as claimed in any preceding claim, wherein the rotation of the payoff and takeup reels is synchronized.

7. An apparatus for curing the insulation of a cable comprising a payoff reel, a takeup reel for receiving cable fed thereto from the payoff reel, an irradiation spread source, means for passing the cable in a linear direction in the presence of the irradiation spread source by rotating the payoff and takeup reels in the direction of the longitudinal axis of the cable, and means for rotating the cable about its longitudinal axis as it passes near the irradiation spread source in continuous 360° turns by rotating said payoff and said takeup reels about the longitudinal axis of the cable, whereby the cable insulation is substantially uniformly cured.

8. An apparatus as claimed in claim 7, wherein the irradiation source is an electron beam source.

9. An apparatus as claimed in claim 7 or 8, further comprising a horn connected to the irradiation source, the horn being in the shape of a three dimensional trapezoid with a width sufficient to cover the cable.

10. An apparatus as claimed in any one of claims 7 to 9, further comprising means for synchronizing the rotation of the payoff and takeup reels.

11. An apparatus as claimed in claim 10, wherein the means for synchronizing comprises a rod connected between the payoff reel and the takeup reel.

12. An apparatus as claimed in any one of claims 7 to 11, further comprising means for maintaining the cable at a substantially constant distance from the irradiation source.

3

13. An apparatus as claimed in claim 12, further comprising a housing covering the irradiation source, and wherein the means for maintaining cable at a substantially constant distance from the horn comprises a pair of holes in the housing, the cable being movable through the holes and passing under the irradiation source.

# Fig.1.

# Fig. 2.

39

1

# Fig. 3.

1

45

44

46

# Fig. 4.

48

49

7

11

50

51

47

## DOCUMENTS CONSIDERED TO BE RELEVANT

| Category | Citation of document with indication, where appropriate, of relevant passages | Relevant to claim |
|---|---|---|
| X | BULL.SEV/VSE, vol. 67, nr. 6, March 20, 1976, Zürich (CH) B.WEBER "Strahlenvernetzung von Polyäthylen-Hochspannungskabeln", pages 311-313 <br><br> * Page 312, column 2, last paragraph; page 313, column 1, first paragraph; figure 4 * | 1-3,5, 7-9,13 |
| | — | |
| | DE - A - 2 058 044 (KABELWERK OBERSPREE) <br><br> * Page 4, paragraph 5; page 5, last paragraph; figure 1 * | 1,2,5, 7,8,12 |
| | — | |
| | DE - B - 1 025 475 (SIEMENS) <br><br> * Column 3, lines 32 to 43; column 4, lines 37 to 47; figure 1 * | 1,2,5, 7,8,12, 13 |
| | — | |
| | US - A - 3 925 671 (AUSTIN) <br><br> * Column 4, line 46 to column 5, line 33; figure 1 * | 1-3,7- 9 |
| | ———— | |

**CLASSIFICATION OF THE APPLICATION (Int. Cl.²)**

H 01 B 13/00
G 21 K 5/04

**TECHNICAL FIELDS SEARCHED (Int.Cl.²)**

H 01 B 13/00
H 01 B 13/06
H 01 B 13/22
G 21 K 5/04

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 20-10-1978 | DEMOLDER |

EPO Form 1503.1 06.78